(19) **Europäisches Patentamt European Patent Office Office européen des brevets**

(11) **EP 4 596 786 A1**

(12) **EUROPEAN PATENT APPLICATION**
published in accordance with Art. 153(4) EPC

(43) Date of publication:
**06.08.2025 Bulletin 2025/32**

(21) Application number: **23872331.6**

(22) Date of filing: **26.09.2023**

(51) International Patent Classification (IPC):
**D06P 5/00** (2006.01)       **D06P 5/30** (2006.01)
**D06M 13/148** (2006.01)       **D06M 15/21** (2006.01)
**D06M 15/643** (2006.01)

(52) Cooperative Patent Classification (CPC):
**D06M 13/148; D06M 15/21; D06M 15/643;
D06P 5/00; D06P 5/30**

(86) International application number:
**PCT/JP2023/034914**

(87) International publication number:
**WO 2024/071108 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022  JP 2022155127**

(71) Applicant: **Mitsubishi Chemical Corporation
Tokyo 100-8251 (JP)**

(72) Inventor: **ONISHI, Hideaki
Tokyo 100-8251 (JP)**

(74) Representative: **Hoffmann Eitle
Patent- und Rechtsanwälte PartmbB
Arabellastraße 30
81925 München (DE)**

(54) **PRETREATMENT AGENTS FOR INKJET TEXTILE PRINTING AND INKJET TEXTILE PRINTING METHOD**

(57)    A pretreatment agent for inkjet textile printing, comprising an N-vinylformamide-based cationic polymer and an organic solvent, wherein the organic solvent is a protic polar solvent.

EP 4 596 786 A1

## Description

Technical Field

The present invention relates to a pretreatment agent for inkjet textile printing and an inkjet textile printing method.

Background Art

Compared to conventional methods using a printing plate, inkjet textile printing has advantages that it does not require cleaning or storage of the plate, is easy to apply to a wide variety of products, and can shorten delivery times. However, inkjet textile printing requires expensive device and ink, and a pretreatment process. Patent Literatures 1 to 3 disclose a technique in which a pretreatment agent is applied to a fabric, then dried, and then inkjet printed. Patent Literatures 4 and 5 disclose a technique in which a pretreatment agent is applied to a fabric, then inkjet printed without drying.

Citation List

Patent Literature

Patent Literature 1: JP H11-302987 A

Patent Literature 2: JP 2003-3385 A

Patent Literature 3: JP H9-279487 A

Patent Literature 4: JP 2017-530269 A

Patent Literature 5: JP 2016-089288 A

Summary of Invention

Technical Problem

The method of drying after applying a pretreatment agent as in patent Literatures 1 to 3 requires space to install a dryer, needs energy and costs required for drying, and has lower productivity than methods that do not involve drying. For this reason, there is a demand for inkjet printing (textile printing) without drying after applying a pretreatment agent.

However, methods such as those described in Patent Literatures 4 and 5 in which the pretreatment agent is not dried after application have a problem that the color of the ink is easily bled due to a capillary phenomenon of the ink and there is a problem with poor ink penetration into interior of the fabric.

As a result of the present inventor's investigations, it was discovered that by using a specific cationic polymer as a pretreatment agent, the cationic polymer attracts the negatively charged dye during printing without drying, making it possible to fix the dye at the desired position and preventing bleeding. However, a pretreatment agent containing a cationic polymer has high viscosity and tends to dry easily, making them difficult to apply by inkjet. For example, the highly viscous pretreatment agent solidifies at the tip of the inkjet head, causing problems such as clogging the head.

For inkjet printing, it may be possible to reduce the viscosity of the pretreatment agent by lowering the concentration of the cationic polymer. However, lowering the concentration of the cationic polymer reduces the effect of the cationic polymer in preventing bleeding. In this case, it is necessary to apply the pretreatment agent multiple times to obtain a sufficient effect.

An object of the present invention is to provide a pretreatment agent for inkjet textile printing which contains a cationic polymer and enables inkjet printing without drying after application of the pretreatment agent, thereby improving productivity, reducing costs, saving energy, and saving space, and which has excellent anti-bleeding effects and can be stably applied by inkjet printing, and an inkjet textile printing method.

Solution to Problem

The present inventors have investigated pretreatment agents containing specific cationic polymers and have found that by including a specific organic solvent or a moisturizer, the pretreatment agent is less likely to dry, and inkjet printing can be performed stably without reducing the concentration of the cationic polymer.

The present invention has the following aspects.

[1] A pretreatment agent for inkjet textile printing, comprising an N-vinylformamide-based cationic polymer and an organic solvent,
wherein the organic solvent is a protic polar solvent.

[2] The pretreatment agent for inkjet textile printing according to [1], wherein a boiling point of the protic polar solvent is 180°C or higher.

[3] The pretreatment agent for inkjet textile printing according to [1] or [2], wherein the boiling point of the protic polar solvent is 300°C or lower.

[4] The pretreatment agent for inkjet textile printing according to any one of [1] to [3], wherein a content of the protic polar solvent is 5% by mass or more and 50% by mass or less based on 100% by mass of the total of the pretreatment agent for inkjet textile printing.

[5] A pretreatment agent for inkjet textile printing comprising an N-vinylformamide-based cationic polymer and a moisturizer,
wherein a boiling point of the moisturizer is 180°C or higher.

[6] The pretreatment agent for inkjet textile printing according to [5], wherein the boiling point of the moisturizer is 300°C or lower.

[7] The pretreatment agent for inkjet textile printing according to [5] or [6], wherein the moisturizer is a protic polar solvent.

[8] The pretreatment agent for inkjet textile printing according to any one of [5] to [7], wherein a content of the moisturizer is 5% by mass or more and 50% by mass or less based on 100% by mass of the total of the pretreatment agent for inkjet textile printing.

[9] The pretreatment agent for inkjet textile printing according to any one of [1] to [4], or [7] or [8], wherein the protic polar solvent has an SP value of $18.0 \text{ MPa}^{1/2}$ or more.

[10] The pretreatment agent for inkjet textile printing according to any one of [1] to [4], or any one of [7] to [9], wherein the protic polar solvent is a polyhydric alcohol.

[11] The pretreatment agent for inkjet textile printing according to any one of [1] to [10], further comprising an antifoaming agent.

[12] The pretreatment agent for inkjet textile printing according to [11], wherein the antifoaming agent is a silicone-based antifoaming agent.

[13] The pretreatment agent for inkjet textile printing according to any one of [1] to [12], wherein a cationic degree of the N-vinylformamide-based cationic polymer is 2.0 meq/g or more and 8.0 meq/g or less.

[14] The pretreatment agent for inkjet textile printing according to any one of [1] to [13], wherein the N-vinylformamide-based cationic polymer comprises at least one selected from the group consisting of polyamidines and polyvinylamines.

[15] The pretreatment agent for inkjet textile printing according to any one of [1] to [14], wherein a content of the N-vinylformamide-based cationic polymer is 0.1% by mass or more and 5.0% by mass or less as a solid content based on 100% by mass of the total of the pretreatment agent.

[16] An inkjet textile printing method comprising:
pretreating a fabric with the pretreatment agent for inkjet textile printing according to any one of [1] to [15]; and inkjet printing a pretreated area of the pretreated fabric without drying the pretreated fabric.

[17] The inkjet textile printing method according to [16], wherein the pretreatment agent for inkjet textile printing is inkjetted onto the fabric.

[18] The inkjet textile printing method according to [16] or [17], wherein the ink used in the inkjet printing is a disperse dye.

[19] A pretreatment agent for inkjet textile printing to be inkjetted comprising an N-vinylformamide-based cationic polymer.

[20] A pretreatment agent for inkjet textile printing comprising an N-vinylformamide-based cationic polymer and having a viscosity of 1.0 mPa·s or more and 30 mPa·s or less.

[21] A pretreatment agent for inkjet textile printing comprising an N-vinylformamide-based cationic polymer and having a surface tension of 10 mN/m or more and 80 mN/m or less.

[22] The pretreatment agent for inkjet textile printing according to any one of [19] to [21], further comprising an organic solvent, wherein the organic solvent is a protic polar solvent.

[23] An inkjet textile printing method comprising:
a pretreatment step of pretreating a fabric by inkjetting a pretreatment agent comprising an N-vinylformamide-based cationic polymer onto the fabric; and a printing step of inkjet printing a pretreated area of the pretreated fabric.

Advantageous Effects of Invention

According to the pretreatment agent for inkjet textile printing and the inkjet textile printing method of the present invention, in inkjet textile printing of fabric, inkjet printing can be performed without drying the fabric that has been pretreated after application of the pretreatment agent, and thus inkjet printing can be performed smoothly and stably without causing problems such as clogging of the inkjet head, while having an excellent anti-bleeding effect.

Description of Embodiments

The pretreatment agent for inkjet textile printing of the present invention (hereinafter, simply referred to as "the pretreatment agent") will be described in detail below. The following description of the constituent elements may be based on a representative embodiment of the present invention, and the present invention is not limited to such an embodiment.

[Pretreatment agent]

The pretreatment agent of the first embodiment of the present invention is characterized by containing an N-vinylformamide-based cationic polymer and an organic solvent, and the organic solvent is a protic polar solvent.
The pretreatment agent according to the second embodiment of the present invention is characterized by containing an N-vinylformamide-based cationic polymer and a moisturizer having a boiling point of 180°C or higher.
When the pretreatment agent according to the present invention contains a protic polar solvent or a moisturizer having a boiling point of a specific value or higher together with an N-vinylformamide-based cationic polymer, the pretreatment agent is less likely to dry out, and the viscosity of the pretreatment agent can be reduced without lowering the cationic polymer concentration.
As described below, it is considered that the protic polar solvent can also contribute to preventing bleeding due to the fixing effect caused by solvation with the dye. For this reason, in the first embodiment of the present invention, a protic polar solvent is used as the organic solvent.
For this reason, the pretreatment agent according to the first embodiment of the present invention, which contains a protic polar solvent, allows smooth and stable inkjet printing, and also provides a sufficient anti-bleeding effect.
Furthermore, it is also considered that when a boiling point of the moisturizer is a specific value or higher, the moisturizer can contribute to preventing bleeding. For this reason, in the second embodiment of the present invention, a moisturizer having a boiling point of 180°C or higher that is unlikely to cause bleeding is used.
For this reason, the pretreatment agent according to the second embodiment of the present invention, which contains a moisturizer having a boiling point of 180°C or higher, allows smooth and stable inkjet printing, and also provides a sufficient anti-bleeding effect.

The pretreatment agent of the present invention may further contain an antifoaming agent, a glue agent, and a deep dyeing agent. The pretreatment agent of the present invention may contain an optional component such as water.

From the viewpoint of the anti-bleeding effect, the viscosity of the pretreatment agent is preferably 1.0 mPa·s or more, more preferably 2.0 mPa·s or more, and even more preferably 3.0 mPa·s or more. On the other hand, from the viewpoint of the inkjet ejection property, the viscosity of the pretreatment agent is preferably 30 mPa·s or less, more preferably 20 mPa·s or less, even more preferably 10 mPa·s or less, and particularly preferably 6.0 mPa·s or less.

The above mentioned upper and lower limits can be combined in any combination. For example, the viscosity of the pretreatment agent is preferably 1.0 mPa·s or more and 30 mPa·s or less, more preferably 2.0 mPa·s or more and 20 mPa·s or less, even more preferably 3.0 mPa·s or more and 10 mPa·s or less, and particularly preferably 3.0 mPa·s or more and 6.0 mPa·s or less.

Accordingly, a pretreatment agent according to another embodiment of the present invention is characterized by containing an N-vinylformamide-based cationic polymer and having a viscosity of 1.0 mPa·s or more and 30 mPa·s or less.

The viscosity of the pretreatment agent can be measured, for example, with an E-type viscometer (TVE-25L manufactured by Toki Sangyo Co., Ltd.).

From the viewpoint of the anti-bleeding effect, the surface tension of the pretreatment agent is preferably 10 mN/m or more, more preferably 20 mN/m or more, and even more preferably 25 mN/m or more. On the other hand, from the viewpoint of the inkjet ejection property, the surface tension of the pretreatment agent is preferably 80 mN/m or less, more preferably 60 mN/m or less, even more preferably 50 mN/m or less, and particularly preferably 40 mN/m or less.

The above mentioned upper and lower limits can be combined in any combination. For example, the surface tension of the pretreatment agent is preferably 10 mN/m or more and 80 mN/m or less, more preferably 20 mN/m or more and 60 mN/m or less, even more preferably 25 mN/m or more and 50 mN/m or less, and particularly preferably 25 mN/m or more and 40 mN/m or less.

Accordingly, a pretreatment agent according to another embodiment of the present invention is characterized by containing an N-vinylformamide-based cationic polymer and having a surface tension of 10 mN/m or more and 80 mN/m or less.

The surface tension of the pretreatment agent can be measured, for example, by the Wilhelmy method using a surface tensiometer (DY-700, manufactured by Kyowa Interface Science Co., Ltd.).

<Flocculant>

The pretreatment agent of the present invention contains an N-vinylformamide-based cationic polymer. The N-vinylformamide-based cationic polymer acts as a flocculant, that is, it has the function of flocculating the dye.

The pretreatment agent of the present invention may contain a flocculant other than the N-vinylformamide-based cationic polymer.

Although the flocculant other than the N-vinylformamide-based cationic polymer is not particularly limited as long as it has the function of flocculating the dye, examples of the flocculant include organic acids, polyvalent metal salts, cationic low molecular weight compounds, cationic polymers other than the N-vinylformamide-based cationic polymer, and the like.

Examples of the organic acid include formic acid, acetic acid, propionic acid, butyric acid, tartaric acid, citric acid, lactic acid, and the like.

Examples of the polyvalent metal salt include compounds composed of a divalent or higher metal ion and an anion. Examples of the divalent or higher metal ion include ions of calcium, magnesium, aluminum, titanium, strontium, iron, and the like. Examples of the anion include a chloride ion, a bromide ion, a nitrate ion, a sulfate ion, a carbonate ion, a hydroxide ion, and the like.

Examples of the cationic low molecular weight compound include (2-hydroxyethyl)trimethylammonium chloride, benzoylcholine chloride, benzyltriethylammonium chloride, trimethylacetohydrazide ammonium chloride, 1-butyl-1-methylpyrrolidinium chloride, 3-hydroxy-4-(trimethylammonio)butyrate hydrochloride, glycidyltrimethylammonium chloride, L-carnitine hydrochloride, and the like.

Examples of the cationic polymer other than the N-vinylformamide-based cationic polymer include polydiallyldimethylammonium chloride, polyallylamine or its derivatives, amine-epihalohydrin copolymers, other quaternary ammonium salt-type cationic polymers, and the like.

(N-vinylformamide-based cationic polymer)

The pretreatment agent of the present invention contains an N-vinylformamide-based cationic polymer. The N-vinylformamide-based cationic polymer is a cationic polymer obtained by polymerization using N-vinylformamide, and has the effect of strengthening the adhesion of the ink to the fabric.

Therefore, the pretreatment agent of another embodiment of the present invention is a pretreatment agent for inkjet textile printing to be inkjetted, and is characterized by containing an N-vinylformamide-based cationic polymer.

The effect of strengthening the adhesion of the ink is related to the level of cationicity.

The N-vinylformamide-based cationic polymer is not particularly limited. Examples of the N-vinylformamide-based cationic polymer include a polyamidine and a polyvinylamine. The polyamidine can be obtained by copolymerization of acrylonitrile and N-vinylformamide. Only one type of N-vinylformamide-based cationic polymer may be used, or two or more types may be used in combination.

The N-vinylformamide-based cationic polymer preferably contains one or more selected from the group consisting of polyamidines and polyvinylamines.

The cationic degree of the N-vinylformamide-based cationic polymer is preferably 8.0 meq/g or less, more preferably 7.8 meq/g or less, even more preferably 6.0 meq/g or less, and particularly preferably 5.5 meq/g or less. On the other hand, since the amount added can be in an appropriate range, the cationic degree of the N-vinylformamide-based cationic polymer is preferably 2.0 meq/g or more, more preferably 4.0 meq/g or more, even more preferably 4.5 meq/g or more, and particularly preferably 5.0 meq/g or more.

The above mentioned upper and lower limits can be combined in any combination. For example, the cationic degree of the N-vinylformamide-based cationic polymer is preferably 2.0 meq/g or more and 8.0 meq/g or less, more preferably 4.0 meq/g or more and 7.8 meq/g or less, even more preferably 4.5 meq/g or more and 6.0 meq/g or less, and particularly preferably 5.0 meq/g or more and 5.5 meq/g or less.

Here, the cationic degree of the cationic polymer is a value defined as follows.

(Measurement of the cationic degree of the cationic polymer)

The cationic degree of the cationic polymer described above can be measured as follows.

Approximately 0.4 g (precisely weighed) of cationic polymer is sampled in a 100 ml measuring flask and demineralized water is added to make up to 100 ml (liquid A). 5 ml is taken from liquid A and demineralized water is added to make up to 200 ml, and then the pH is adjusted to 2.5 with a 0.1 N HCl aqueous solution. After that, 3 drops of toluidine blue are added and titration is performed using a 1/400 N-PVSK (potassium polyvinyl sulfate) solution until the color of the prepared solution changes from blue to red. A blank test is also performed in the same manner, and the cationic degree can be calculated from the following formula.

{(1/400) x (PVSK solution factor) x (titration amount --> (ml) - blank titration amount (ml)) x (100/5) }/{ (sampling amount (g)) x (polymer concentration)}

Commercially available N-vinylformamide-based cationic polymers may be used. Examples of commercially available polyamidines include PVADL (manufactured by Mitsubishi Chemical Corporation), SC-700, and SC-700L (all manufactured by Hymo Corporation). Examples of commercially available polyvinylamines include PVAM0570B, PVAM0595B, and KP8040 (all manufactured by Mitsubishi Chemical Corporation).

<Protic polar solvent>

The pretreatment agent of the first embodiment of the present invention contains an organic solvent, and the organic solvent is a protic polar solvent.

It is considered that the protic polar solvent can be strongly solvated with the negatively charged dye by hydrogen bonding, and therefore can fix the dye at the desired position and prevent bleeding.

It is also considered that the inclusion of a protic polar solvent in the pretreatment agent can delay the drying (the drying of moisture) of the pretreatment agent in the inkjet head when ejecting is not being performed, and can also delay the increase in the viscosity of the pretreatment agent (prevent a sudden increase in the viscosity).

Examples of the protic polar solvent include polyhydric alcohols, methanol, ethanol, isopropyl alcohol, acetic acid, and the like. Among these, polyhydric alcohols, methanol, and ethanol are preferred, and polyhydric alcohols are more preferred.

Examples of the polyhydric alcohols include ethylene glycol, diethylene glycol, triethylene glycol, tetraethylene glycol, propylene glycol, dipropylene glycol, glycerin, diglycerin, and the like. Among these, ethylene glycol, propylene glycol, and glycerin are preferred.

These protic polar solvents may be used alone or in combination of two or more.

From the viewpoint of the anti-bleeding effect, the boiling point of the protic polar solvent is preferably 160°C or higher, more preferably 170°C or higher, even more preferably 180°C or higher, particularly preferably 190°C or higher, and most preferably 195°C or higher. On the other hand, from the viewpoint of the easily volatility, the boiling point of the protic polar solvent is preferably 300°C or lower, more preferably 295°C or lower, and even more preferably 290°C or lower.

The boiling point of the protic polar solvent can be measured, for example, by the equilibrium reflux boiling point method (JIS K 2233).

The boiling points of the polyhydric alcohols mentioned above, which are given as examples of suitable protic polar solvents, are as follows:

Ethylene glycol: boiling point 197.6°C

Diethylene glycol: boiling point 245°C

Triethylene glycol: boiling point 287.4°C

Tetraethylene glycol: boiling point 328°C

Propylene glycol: boiling point 188°C

Dipropylene glycol: boiling point 232.2°C

Glycerin: boiling point 290°C

Diglycerin: boiling point 265 to 270°C

The SP value (Hildebrand solubility parameter, $\delta$) of the protic polar solvent is preferably 18.0 MPa$^{1/2}$ or more, more preferably 20.0 MPa$^{1/2}$ or more, even more preferably 25.0 MPa$^{1/2}$ or more, and particularly preferably 30.0 MPa$^{1/2}$ or more, from the viewpoint of the anti-bleeding effect. On the other hand, from the viewpoint of the anti-bleeding effect, the SP value of the protic polar solvent is preferably 40.0 MPa$^{1/2}$ or less, more preferably 36.0 MPa$^{1/2}$ or less, even more preferably 35.0 MPa$^{1/2}$ or less, and particularly preferably 32.0 MPa$^{1/2}$ or less.

With regard to the HSP value (Hansen solubility parameters: $\delta_D$, $\delta_P$, $\delta_H$) of the protic polar solvent, from the viewpoint of the anti-bleeding effect, $\delta_D$ is preferably 16.0 MPa$^{1/2}$ or more, more preferably 17.0 MPa$^{1/2}$ or more, even more preferably 17.5 MPa$^{1/2}$ or more, and particularly preferably 18.0 MPa$^{1/2}$ or more. On the other hand, from the viewpoint of the anti-bleeding effect, $\delta_D$ is preferably 20.0 MPa$^{1/2}$ or less, more preferably 19.5 MPa$^{1/2}$ or less, even more preferably 19.0 MPa$^{1/2}$ or less, and particularly preferably 18.5 MPa$^{1/2}$ or less.

From the viewpoint of the anti-bleeding effect, $\delta_P$ is preferably 5.5 MPa$^{1/2}$ or more, more preferably 8.0 MPa$^{1/2}$ or more, even more preferably 9.0 MPa$^{1/2}$ or more, and particularly preferably 11.0 MPa$^{1/2}$ or more. On the other hand, from the viewpoint of the anti-bleeding effect, $\delta_P$ is preferably 13.0 MPa$^{1/2}$ or less, more preferably 12.5 MPa$^{1/2}$ or less, even more preferably 12.0 MPa$^{1/2}$ or less, and particularly preferably 11.5 MPa$^{1/2}$ or less.

From the viewpoint of the anti-bleeding effect, $\delta_H$ is preferably 6.0 MPa$^{1/2}$ or more, more preferably 15.0 MPa$^{1/2}$ or more, even more preferably 21.0 MPa$^{1/2}$ or more, and particularly preferably 23.0 MPa$^{1/2}$ or more. On the other hand, from the viewpoint of the anti-bleeding effect, $\delta_H$ is preferably 30.0 MPa$^{1/2}$ or less, more preferably 29.0 MPa$^{1/2}$ or less, even more preferably 25.0 MPa$^{1/2}$ or less, and particularly preferably 23.5 MPa$^{1/2}$ or less.

The SP value can be calculated using the HSP value because the HSP value and the SP value are related by the following formula (1).

$$(\delta)^2 = (\delta_D)^2 + (\delta_P)^2 + (\delta_H)^2 \qquad (1)$$

The HSP value can be calculated using the software: HSPiP (Hansen Solubility Parameters in Practice).

The SP values (MPa$^{1/2}$) and HSP values (MPa$^{1/2}$) of the main polyhydric alcohols among the polyhydric alcohols mentioned above as examples of suitable protic polar solvents are as follows. Note that the following "calculated value" is value at 25°C calculated using the method described above, and the following "literature value" is value referenced in "POLYMER HANDBOOK, FOURTH EDITION, Volume 2, J. BRANDRUP, E. H. IMMERGUT, and E. A. GRULKE, pages 688 to 694, 698 to 701".

Ethylene glycol:

SP value = 31.5 (calculated value)

HSP values ($\delta_D$, $\delta_P$, $\delta_H$) = 18.0, 11.1, 23.4 (calculated value)

Diethylene glycol:

SP value = 29.2 (calculated value)

HSP values ($\delta_D$, $\delta_P$, $\delta_H$) = 17.4, 10.6, 20.9 (calculated value)

Triethylene glycol:

SP value = 21.9 (literature value)

HSP values ($\delta_D$, $\delta_P$, $\delta_H$) = 16, 12.5, 18.6 (literature value)

Propylene glycol:

SP value = 29.3 (calculated value)

HSP values ($\delta_D$, $\delta_P$, $\delta_H$) = 17.4, 9.1, 21.7 (calculated value)

Dipropylene glycol:

SP value = 26.4 (calculated value)

HSP values ($\delta_D$, $\delta_P$, $\delta_H$) = 16.5, 10.6, 17.7 (calculated value)

Glycerin:

SP value = 35.7 (calculated value)

HSP values ($\delta_D$, $\delta_P$, $\delta_H$) = 18.3, 11.3, 28.5 (calculated value)

<Moisturizer>

The pretreatment agent of the second embodiment of the present invention includes a moisturizer having a boiling point of 180°C or higher.

The moisturizer has the function of delaying the drying (the drying of moisture) of the pretreatment agent in the inkjet head when ejecting is not being performed, and delaying the increase in the viscosity of the pretreatment agent (preventing a sudden increase in the viscosity). It should be noted that, since some common moisturizers are prone to bleeding, the present invention uses a moisturizer having a boiling point of 180°C or higher that is unlikely to cause bleeding.

Although the boiling point of the moisturizer is 180°C or higher, it is preferably 185°C or higher, more preferably 190°C or higher, and even more preferably 195°C or higher from the viewpoint of the anti-bleeding effect. On the other hand, moisturizers having excessively high boiling points are difficult to volatilize, so the boiling point of the moisturizer is preferably 300°C or lower, more preferably 295°C or lower, and even more preferably 290°C or lower.

The boiling point of the moisturizer can be measured, for example, by the equilibrium reflux boiling point method (JIS K 2233).

As described above, the moisturizer can be strongly solvated with the negatively charged dye by hydrogen bonding, so that the dye can be fixed at the desired position and bleeding can be prevented; the moisturizer can also delay the drying (the drying of moisture) of the pretreatment agent in the inkjet head when ejecting is not being performed, and delay the increase in the viscosity of the pretreatment agent (prevent a sudden increase in the viscosity); therefore, the moisturizer used in the second embodiment of the present invention is preferably one selected from the protic polar solvents described above.

Furthermore, from the viewpoint of penetration and bleeding, the moisturizer used in the present invention may include polyhydric alcohols, ethers, nitrogen-containing heterocyclic compounds, amides, amines, sulfur-containing compounds, and the like. Among them, polyhydric alcohols, ethers, amides, and amines are preferred, and polyhydric alcohols are more preferred.

Examples of polyhydric alcohols include ethylene glycol (boiling point 197.6°C), diethylene glycol (boiling point 245°C), triethylene glycol (boiling point 287.4°C), tetraethylene glycol (boiling point 328°C), propylene glycol (boiling point 188°C), dipropylene glycol (boiling point 232.2°C), glycerin (boiling point 290°C), diglycerin (boiling point 265 to 270°C), and the like. Among these, ethylene glycol, propylene glycol, and glycerin are preferred.

These moisturizers may be used alone or in combination of two or more.

The preferred SP value and HSP value of the moisturizers are the same as those of the protic polar solvents described above.

<Antifoaming agent>

The pretreatment agent of the present invention may contain an antifoaming agent.

By including an antifoaming agent, the color bleeding can be more reliably prevented and the permeability of the ink can be increased.

Any of the antifoaming agents used in common fiber treatments can be used, such as alcohol-based antifoaming agents, fatty acid derivative-based antifoaming agents, and silicone-based antifoaming agents. Among these, it is preferable to include one or more silicone-based antifoaming agents from the viewpoint of the washability when washing off dyes and auxiliary agents that have not been fixed to the fabric.

Only one type of antifoaming agents may be used, or two or more types may be used in combination.

(Alcohol-based antifoaming agent)

As the alcohol-based antifoaming agents, those having an HLB value of 15 or less are preferred, and those having an HLB value of 10 or less are more preferred.

As the alcohol-based antifoaming agents, higher alcohols can be preferably used. The carbon number of the higher alcohol is preferably 12 or more, and is preferably 25 or less, and more preferably 22 or less. For example, the number of carbon atoms is preferably 12 to 25, and more preferably 12 to 22.

The alcohol-based antifoaming agents may be primary alcohols, secondary alcohols, or tertiary alcohols. Among these, primary alcohols and secondary alcohols are preferred.

The alcohol-based antifoaming agents may be either monohydric alcohols or polyhydric alcohols. The number of hydroxyl groups in the alcohol is preferably 2 or more, and is preferably 4 or less, and more preferably 3 or less. For example, the number of hydroxyl groups is preferably 2 to 4, and more preferably 2 to 3.

Alcohols having ether groups are also preferably used as alcohol-based antifoaming agents.

Examples of the alcohols having ether groups include polyalkylene glycol compounds and compounds obtained by addition polymerization of alkylene oxides to higher alcohols.

As the alkylene oxides, ethylene oxide and propylene oxide can be used. Among them, polyalkylene glycol-based compounds are preferred, and among them, polyethylene glycol-based compounds are more preferred. It is more preferred that the polyethylene glycol-based compounds have an alkyl group. That is, alkyl-polyethylene glycol-based compounds are more preferred.

Other examples of the alcohol-based antifoaming agents include diamylphenoxyethanol, 3-heptanol, 2-ethylhexanol, acetylene alcohol, acetylene glycol, isopropyl alcohol, and alkyl-polyethylene glycol-based compounds.

Among the above, higher alcohols and alcohols having an ether group are preferred, higher alcohols and polyalkylene glycol-based compounds are more preferred, higher alcohols and polyethylene glycol-based compounds are even more preferred, and higher alcohols and alkyl-polyethylene glycol-based compounds are particularly preferred.

Examples of the commercially available alcohol-based antifoaming agents include Antifloss F-102 and F-103 (both manufactured by Daiichi Kogyo Seiyaku Co., Ltd.), and Antifoaming agent (manufactured by Furukawa Chemical Industry Co., Ltd.).

(Fatty acid derivative-based antifoaming agent)

As the fatty acid derivative-based antifoaming agents, those having an HLB value of 15 or less are preferred, and those having an HLB value of 10 or less are more preferred.

Examples of the fatty acid derivative-based antifoaming agents include mineral oil, sorbitan fatty acid ester, fatty acid ester, glycerin fatty acid ester, and sucrose fatty acid ester. Among them, mineral oil, which has excellent immediate effect, is preferred. Furthermore, as the mineral oil, a long chain alkyl-based mineral oil is preferred.

The number of carbon atoms of the fatty acid used as the raw material of the fatty acid derivative of the fatty acid derivative-based antifoaming agent is preferably 16 or more, more preferably 18 or more. On the other hand, it is preferably 24 or less, and more preferably 22 or less. The above mentioned upper and lower limits can be combined in any combination. For example, the number of carbon atoms of the fatty acid is preferably 16 or more and 24 of less, and more preferably 18 or more and 22 or less.

Examples of the fatty acids used as the raw material for the fatty acid derivative of the fatty acid derivative-based antifoaming agents include, stearic acid, oleic acid, erucic acid, and behenic acid. Among these, stearic acid is preferred.

Examples of the commercially available fatty acid derivative-based antifoaming agents include S-39H and S-49H (manufactured by Daiichi Kogyo Seiyaku Co., Ltd.), and NK-2 (manufactured by Osaka Chemical Co., Ltd.).

(Silicone-based antifoaming agent)

There are no particular limitations on the silicone-based antifoaming agents. For example, both aqueous types and non-aqueous types can be used. The silicone-based antifoaming agents may be of the oil type consisting of silicone oil, the oil compound type in which a dispersant is added to silicone oil, the emulsion type in which silicone oil is made into an emulsion, or the self-emulsifying type. Among these, the emulsion type is preferred from the viewpoint of supplementing dispersibility in water. Among the emulsion types, the O/W type is more preferred.

Specific examples of silicone-based antifoaming agents include polydimethylsiloxane, dimethylsilicone, and fluorosilicone. Among these, polydimethylsiloxane is preferred.

Examples of the commercially available silicone-based antifoaming agents include TSA730, TSA732, TSA770, TSA772, TSA7341, YMA6509, and TSA780 (all manufactured by GE Toshiba Silicones Co., Ltd.), M-6500, and M-700 (all manufactured by Ichiho-sha), Antifoam SS, and Antifoam S-8 (all manufactured by Nissei Kasei Co., Ltd.), and KM-70, KM-71, KM-73, KM-73A, KM-90, KM-89, KM-83A, KM-75, KS-502, KS-537, KM-98, KM-7750, and X-50-1041 (all manufactured by Shin-Etsu Chemical Co., Ltd.).

<Glue Agent>

The pretreatment agent of the present invention may contain a glue agent.

As the glue agent, any of natural glue agents, semi-synthetic glue agents, and synthetic glue agents can be used.

Examples of the natural glue agents include starch-based glue agents such as corn starch, British gum, and the like; gum-based glue agents such as guar gum, locust bean gum, and the like; seaweed-based glue agents such as alginates, agar, and the like; and inorganic glue agents such as montmorillonite, silica (silicon dioxide), and the like.

Examples of the semi-synthetic glue agents include cellulose-based glue agents such as carboxymethylcellulose, methylcellulose, hydroxyethylcellulose, hydroxypropylmethylcellulose, and the like.

Examples of the synthetic glue agents include polyvinyl alcohol, polyacrylates, polyethylene oxide, polyvinyl acetate/maleic anhydride, and the like.

It is preferable that the glue agent contains an glue agent that is compatible with the N-vinylformamide-based cationic polymer and is nonionic or anionic. By adding the glue agent, the viscosity of the pretreatment agent can be adjusted to an appropriate level.

Here, "the glue agent is compatible with the N-vinylformamide-based cationic polymer" means that when 250 g each of a 1% by mass N-vinylformamide-based cationic polymer aqueous solution and a 1% by mass glue agent aqueous solution are mixed and left at 25°C for 24 hours, and then filtered through an 80 mesh sieve, the sieve residue is less than 10 g.

Examples of the nonionic or anionic glue agents that are compatible with the N-vinylformamide-based cationic polymer include hydroxyethyl cellulose, methyl cellulose, hydroxypropyl methyl cellulose, guar gum, and montmorillonite.

Only one type of the glue agent may be used, or two or more types may be used in combination.

As the glue agent, it is preferable to use a natural glue agent and/or a semi-synthetic glue agent, and it is more preferable to use one or more types selected from the group consisting of methyl cellulose, hydroxypropyl methyl cellulose, hydroxyethyl cellulose, and guar gum.

In addition, it is more preferable to use a combination of one or more types selected from the group consisting of methylcellulose, hydroxypropylmethylcellulose, hydroxyethylcellulose, and guar gum, and montmorillonite as the glue agent, from the viewpoint of excellent washability when washing off dyes and auxiliary agents that have not been fixed to the fabric.

Examples of the commercially available glue agents include hydroxypropylmethylcellulose (manufactured by Shin-Etsu Chemical Co., Ltd.), guar gum (ESAFLOR 4W, manufactured by Lamberti), and montmorillonite (Kunipia F and Sumecton, both manufactured by Kunimine Industries Co., Ltd.).

<Deep dyeing agent>

The pretreatment agent of the present invention may contain a deep dyeing agent. The inclusion of a deep dyeing agent can further improve the penetration of the ink into the fabric.

As the deep dyeing agent, among the deep dyeing agents used in common fiber treatment, those compatible with N-vinylformamide-based cationic polymers are preferable.

Here, "the deep dyeing agent is compatible with the N-vinylformamide-based cationic polymer" means that when 250 g each of a 1% by mass N-vinylformamide-based cationic polymer aqueous solution and a 1% by mass deep dyeing agent aqueous solution are mixed and left at 25°C for 24 hours, and then filtered through an 80 mesh sieve, the sieve residue is less than 10 g.

The deep dyeing agents that are compatible with the N-vinylformamide-based cationic polymer are not particularly limited, and examples include amides, glycol ethers, and polyethers. Among these, amides are preferred, and among these, N-alkylol amides are more preferred.

Only one type of deep dyeing agent may be used, or two or more types may be used in combination.

Examples of the commercially available deep dyeing agents include Sanflorene SN (N-alkylolamide, manufactured by Nicca Chemical Co., Ltd.), Hiol 420 (glycol ether of higher alcohol, manufactured by Hayashi Chemical Co., Ltd.), and Cellopol PA-19S (manufactured by Sanyo Chemical Industries, Ltd.).

<Optional components>

The pretreatment agent of the present invention may contain, as optional components, water, an organic solvent other than the protic polar solvent or the moisturizer, a dissolution aid, a viscosity modifier, a pH adjuster, an anti-reduction agent, a preservative, a surfactant, or the like within a range that does not impair the effects of the present invention.

<Composition>

The composition of the pretreatment agent of the present invention is described below.

In the following description of the composition, "content" means "the proportion of the active ingredient contained in that agent in the pretreatment agent", and "blending ratio" means "the proportion of the blended amount (added amount) of the agent itself, that is, including not only the active ingredient but also a solvent such as water, when the solvent included".

Since the moisturizer is itself a solvent, it is indicated as "content" as the proportion of the agent's content.

The content of the N-vinylformamide-based cationic polymer in the pretreatment agent of the present invention varies depending on the type of fabric to be treated, the amount of the pretreatment agent applied, and the like.

The content of the N-vinylformamide-based cationic polymer is preferably 0.1% by mass or more, more preferably 0.2% by mass or more, and even more preferably 0.5% by mass or more, in terms of the solid content based on 100% by mass of the total of the pretreatment agent. When the content of the N-vinylformamide-based cationic polymer is equal to or more than the above mentioned lower limit, it is easy to improve the adhesion of the ink to the fabric.

The upper limit of the content of the N-vinylformamide-based cationic polymer is preferably 5.0% by mass or less, more preferably 3.0% by mass or less, even more preferably 2.0% by mass or less, particularly preferably 1.0% by mass or less, and most preferably 0.9% by mass or less, in terms of the solid content based on 100% by mass of the total of the pretreatment agent. When the content of the N-vinylformamide-based cationic polymer is equal to or less than the above mentioned upper limit, the washability when washing off the dye and auxiliary agents that are not fixed to the fabric is improved, and the texture is also improved.

The above mentioned upper and lower limits can be combined in any combination. For example, the content of the N-vinylformamide-based cationic polymer in the pretreatment agent is preferably 0.1% by mass or more and 5.0% by mass or less, more preferably 0.2% by mass or more and 3.0% by mass or less, and even more preferably 0.5% by mass or more and 2.0% by mass or less.

In particular, when the content of the N-vinylformamide-based cationic polymer in the pretreatment agent is 0.1% by mass or more and 0.9% by mass or less, the adhesion of the ink to the fabric, the washability, and the texture can be improved in a well-balanced manner, which is preferable.

The content of the protic polar solvent in the pretreatment agent of the present invention is preferably 5% by mass or more, more preferably 10% by mass or more, and even more preferably 20% by mass or more, based on the 100% by mass of the total of the pretreatment agent. When the content of the protic polar solvent is equal to or more than the above mentioned lower limit, the effect of preventing drying due to the inclusion of the protic polar solvent is excellent, and the stability of inkjet printing is excellent. On the other hand, from the viewpoint of the anti-bleeding, the upper limit of the content of the protic polar solvent is preferably 50% by mass or less, more preferably 45% by mass or less, and even more preferably 40% by mass or less, based on 100% by mass of the total of the pretreatment agent.

The above mentioned upper and lower limits can be combined in any combination. For example, the content of the protic polar solvent is preferably 5% by mass or more and 50% by mass or less, more preferably 10% by mass or more and 45% by mass or less, and even more preferably 20% by mass or more and 45% by mass or less.

The content of the moisturizer in the pretreatment agent of the present invention is preferably 5% by mass or more, more preferably 10% by mass or more, and even more preferably 20% by mass or more, based on 100% by mass of the total of the pretreatment agent. When the content of the moisturizer is equal to or more than the above mentioned lower limit, the effect of preventing drying due to the inclusion of the protic polar solvent is excellent, and the stability of inkjet printing is excellent. On the other hand, from the viewpoint of the anti-bleeding, the upper limit of the content of the moisturizer is preferably 50% by mass or less, more preferably 45% by mass or less, and even more preferably 40% by mass or less, based on 100% by mass of the total of the pretreatment agent.

The above mentioned upper and lower limits can be combined in any combination. For example, the content of the moisturizer is preferably 5% by mass or more and 50% by mass or less, more preferably 10% by mass or more and 45% by mass or less, and even more preferably 20% by mass or more and 45% by mass or less.

When the pretreatment agent of the present invention contains the antifoaming agent, from the viewpoints of the texture and the washability, the blending ratio of the antifoaming agent in the pretreatment agent is preferably 0.1% by mass or more, more preferably 1.0% by mass or more, and even more preferably 2.0% by mass or more, based on 100% by mass of the total of the pretreatment agent. On the other hand, from the viewpoint of the anti-bleeding, the blending ratio of the antifoaming agent is preferably 5.0% by mass or less, more preferably 4.0% by mass or less, and even more preferably 3.0% by mass or less, based on 100% by mass of the total of the pretreatment agent.

The above mentioned upper and lower limits can be combined in any combination. For example, the blending ratio of the antifoaming agent is preferably 0.1% by mass or more and 5.0% by mass or less, more preferably 1.0% by mass or more and 4.0% by mass or less, and even more preferably 2.0% by mass or more and 3.0% by mass or less.

When the pretreatment agent of the present invention contains the glue agent, the content of the glue agent in the pretreatment agent varies depending on the viscosity required for the application method. Since it is easy to increase the viscosity of the pretreatment agent, the content of the glue agent in the pretreatment agent is preferably 0.5% by mass or more, and more preferably 1.0% by mass or more, in terms of the solid content based on 100% by mass of the total of the pretreatment agent. On the other hand, in order to provide excellent washability when washing off dye and auxiliary agents that are not fixed to the fabric, the content of the glue agent is preferably 5.0% by mass or less, and more preferably 4.0% by mass or less, in terms of the solid content based on 100% by mass of the total of the pretreatment agent.

The above mentioned upper and lower limits can be combined in any combination. For example, the content of the glue agent in the pretreatment agent is preferably 0.5% by mass or more and 5.0% by mass or less, and more preferably 1.0% by mass or more and 4.0% by mass or less.

When the pretreatment agent of the present invention contains a deep dyeing agent, from the viewpoint of the excellent ink penetration into the fabric, the blending ratio of the deep dyeing agent in the pretreatment agent is preferably 1.0% by mass or more, more preferably 3.0% by mass or more, and even more preferably 4.0% by mass or more, based on 100% by mass of the total of the pretreatment agent. On the other hand, from the viewpoint of the prevention of the ink from bleeding, the blending ratio of the deep dyeing agent is preferably 20.0% by mass or less, more preferably 15.0% by mass or less, even more preferably 10.0% by mass or less, and particularly preferably 8.0% by mass or less, based on 100% by mass of the total of the pretreatment agent.

The above mentioned upper and lower limits can be combined in any combination. For example, the blending ratio of the deep dyeing agent in the pretreatment agent is preferably 1.0% by mass or more and 20.0% by mass or less, more preferably 3.0% by mass or more and 15.0% by mass or less, and even more preferably 4.0% by mass or more and 8.0% by mass or less.

When the pretreatment agent of the present invention contains the deep dyeing agent, from the viewpoint of the excellent ink penetration into the fabric, the blending amount of the deep dyeing agent in the pretreatment agent is preferably 400 parts by mass or more, more preferably 450 parts by mass or more, based on 100 parts by mass of the total of the N-vinylformamide-based cationic polymer. On the other hand, from the viewpoint of the prevention of the ink from bleeding, the upper limit of the blending amount of the deep dyeing agent is preferably 2000 parts by mass or less, more preferably 1500 parts by mass or less, based on the total mass of the N-vinylformamide-based cationic polymer.

The above mentioned upper and lower limits can be combined in any combination. For example, the blending amount of the deep dyeing agent in the pretreatment agent is preferably 400 parts by mass or more and 2000 parts by mass or less, more preferably 450 parts by mass or more and 1500 parts by mass or less.

[Method of producing pretreatment agent]

Although there are no particular limitations on the method of producing the pretreatment agent for inkjet textile printing of the present invention, examples include a method of blending and stirring the N-vinylformamide-based cationic polymer, the protic polar solvent or the moisturizer, and other additives used as necessary. For stirring, a known stirrer can be used.

[Inkjet textile printing method]

The inkjet textile printing method of the first embodiment of the present invention includes a step of pretreating a fabric with the pretreatment agent for inkjet textile printing of the present invention, and a step of inkjet textile printing the pretreated area of the fabric without drying the pretreated fabric.

The inkjet textile printing method of the second embodiment of the present invention includes a pretreatment step of pretreating a fabric by inkjetting a pretreatment agent containing an N-vinylformamide-based cationic polymer onto the fabric, and a printing step of inkjet printing a pretreated area of the pretreated fabric.

<Pretreatment agent application step>

The material of the fabric to be pretreated is not particularly limited as long as it is a fabric normally used in inkjet textile printing, and an example of this is polyester.

The pretreatment of the fabric can be performed, for example, by applying the pretreatment agent of the present invention to the fabric. Examples of methods for applying the pretreatment agent of the present invention include a method of inkjetting the pretreatment agent, a method of immersing a fabric in the pretreatment agent, a method of applying the pretreatment agent with a roll coater, a method of applying the pretreatment agent with a squeegee, and a method of spraying the pretreatment agent with a spray device.

The method of inkjetting the pretreatment agent is preferred because it requires less wastewater and can save space.

<Inkjet printing process>

In the inkjet textile printing method of the present invention, the fabric pretreated with the pretreatment agent of the present invention is preferably inkjet printed without drying. However, "inkjet printing without drying the pretreated fabric" means that inkjet printing is performed on the area to which the pretreatment agent is applied while the pretreatment agent on the fabric is in a liquid state.

An example of the ink used in inkjet printing is a disperse dye. The pretreatment agent of the present invention is particularly suitable for inkjet printing with a disperse dye on polyester fabric.

The inkjet textile printing method of the present invention can employ a known method, except that the pretreatment agent for inkjet textile printing of the present invention is used and the pretreated fabric is inkjet printed without drying.

For example, after inkjet printing, the ink is made to penetrate into the fabric by dry heat treatment (oven) or vapor hear treatment (steaming), and dyes and auxiliary agents that have are not fixed to the fabric are washed away by washing treatment. As the washing treatment, although a known washing method can be used, reduction washing is preferable, and alkali reduction treatment is more preferable.

As described above, in the present invention, the pretreatment agent of the present invention, which contains the N-vinylformamide-based cationic polymer and the protic polar solvent or the moisturizer having a boiling point of 180°C or higher, is used.

By using the pretreatment agent of the present invention, even if inkjet printing is performed without drying after application of the pretreatment agent, color bleeding is prevented, and problems such as head clogging due to drying of the pretreatment agent are prevented, allowing smooth and stable inkjet printing. Furthermore, by not carrying out drying after application of the pretreatment agent, productivity can be improved, and cost, energy, and space can be reduced.

Examples

The present invention will be specifically described below using Examples. The present invention is not limited to the following description.

[Materials]

The materials used in the Examples and Comparative Examples are listed below.

<N-vinylformamide-based cationic polymer>

PVADL1: Polyamidine (trade name "PVADL", manufactured by Mitsubishi Chemical Corporation, polymer concentration 26.6% aqueous solution, molecular weight: 300,000, cationic degree: 5.1 meq/g)

PVADL2: Polyamidine (polymer concentration 26.6% aqueous solution, molecular weight: 147,000, cationic degree: 5.5 meq/g)

<Other cationic polymers>

Polyallylamine hydrochloride (trade name "PAA-HCl-10L", manufactured by Nittobo Medical Co., Ltd., molecular weight: 150,000 (catalog value))

The molecular weights of the PVADL1 and PVADL2 were measured by the following method.

Apparatus: HLC-8320 (manufactured by Tosoh Corporation)

Column: TSKgel guard column $PW_{XL}$-CP (6.0 mm I.D. x 4 cm) + TSKgel G6000 $PW_{XL}$-CP + TSKgel G3000 $PW_{XL}$-CP (7.8 mm I.D. x 30 cm each) (manufactured by Tosoh Corporation)

Detector: RI detector

Eluent: 0.2 M $NaNO_3$ aqueous solution

Flow rate: 1.0 ml

Calibration curve: Standard pullulan (manufactured by Shodex)

Concentration: 0.1% by mass equivalent

Injection volume: 100 μL

Column temperature: 40°C

Pretreatment: A sample was prepared by adding caustic soda to the polymer aqueous solution, and the pH was adjusted to 5 to 7. The sample thus prepared was weighed and diluted to 0.1% by mass equivalent by adding a specified amount of the eluent. After 2 hours, the sample solution was gently shaken and filtered through a 0.45 μm hydrophilic PTFE cartridge filter.

<Antifoaming agent>

Silicone-based (product name "KM-90", manufactured by Shin-Etsu Chemical Co., Ltd., emulsion type, component: polydimethylsiloxane)

<Protic polar solvent/moisturizer>

Ethylene glycol (manufactured by Fujifilm Wako Pure Chemical Corporation, boiling point: 197.6°C, SP value: 31.5 (calculated value), HSP values ($\delta_D$, $\delta_P$, $\delta_H$): 18.0, 11.1, 23.4 (calculated value))

Propylene glycol (manufactured by Fujifilm Wako Pure Chemical Corporation, boiling point: 188°C, SP value: 29.3 (calculated value), HSP values ($\delta_D$, $\delta_P$, $\delta_H$): 17.4 , 9.1, 21.7 (calculated value))
Glycerin (manufactured by Fujifilm Wako Pure Chemical Corporation, boiling point: 290°C, SP value: 35.7 (calculated value), HSP values ($\delta_D$, $\delta_P$, $\delta_H$): 18.3, 11.3, 28.5 (calculated value))

Diethylene glycol ethyl methyl ether (manufactured by Fujifilm Wako Pure Chemical Corporation, boiling point: 176°C, SP value: 17.6 (calculated value), HSP values ($\delta_D$, $\delta_P$, $\delta_H$): 15.8, 5.4, 5.7 (calculated value))

[Examples 1 to 5 and Comparative Examples 1 to 4]

<Preparation of pretreatment agent>

A pretreatment agent was prepared according to the composition shown in Table 1. Specifically, each component was placed in a container and stirred for 2 hours using a stirrer, and then left to stand for a whole day and night for aging.
The units of values expressing the content or blending ratio of each component in Table 1 are % by mass. The N-vinylformamide-based cationic polymer and the glue agent are expressed as the content of the active ingredient (solid content) based on 100% by mass of the total of the pretreatment agent. The content of the moisturizer is the content based on 100% by mass of the total of the pretreatment agent. The blending ratio of the antifoaming agent is the blending ratio based on 100% by mass of the total of the pretreatment agent. Water was added so that the total amount of the pretreatment agent was 100% by mass.

In Table 1, a column having no numerical value indicates that the component was not contained.

The viscosity of the pretreatment agent in Example 1 was 9.80 mPa·s and the surface tension was 25.73 mN/m. The viscosities of the pretreatment agents in Examples 2 to 4 and Comparative Example 1 were all 6.90 mPa·s. The viscosity of the pretreatment agent in Comparative Example 3 was 5.96 mPa·s and the surface tension was 30.63 mN/m. The viscosity of the pretreatment agent in Comparative Example 4 was 6.65 mPa·s and the surface tension was 29.08 mN/m. The viscosity of the pretreatment agent in Example 5 was 3.28 mPa·s and the surface tension was 26.87 mN/m.

<Pretreatment>

Inkjet ejection tests of the pretreatment agent were conducted using an inkjet device (Inkjet Lab, manufactured by Cluster Technology Co., Ltd.) as described below.

In print tests for bleeding evaluation, which will be described later, the pretreatment agent was applied using a commercially available cosmetic hand spray. The amount of the pretreatment agent applied was the amount that would be ejected with three pushes, although this was affected by the viscosity of the pretreatment agent composition, the weighting of the fabric, and the print area.

<Inkjet printing>

The fabrics of Examples 1 to 5 and Comparative Examples 1 to 4 were transferred to an inkjet device (Inkjet Lab, manufactured by Cluster Technology Co., Ltd.) within 5 seconds after application of the pretreatment agent, i.e., before the applied pretreatment agent had dried, and ink was applied to the areas where the pretreatment agent had been applied.

The ink used was black dispersion ink manufactured by Toshin Kogyo Co., Ltd. The fabric used was polyester dechine (longitudinal density: 221 lines/inch, transverse density: 108 lines/inch, basis weight: 91 g/m$^2$) (manufactured by Shikisensha Co., Ltd.).

A grid pattern was used as the printing image pattern. In the pattern, the grid size was 2 mm square, and the line thickness was 0.2 mm.

<Vapor heat treatment>

The fabrics to which the ink had been applied were subjected to vapor heat treatment at 170°C for 10 minutes using HT-3-550 HT steamer manufactured by Tsujii Senki Kogyo Co., Ltd.

<Washing treatment>

After the vapor heat treatment, the fabric was washed with water for 10 minutes by rubbing twice per second. 2 g/L of surfactant (Amylazine D), 2 g/L of sodium hydrosulfite, and 2 g/L of NaOH (granules) were added and dissolved in 80°C warm water. Then, the washed fabric was added and subjected to reduction washing for 10 minutes to wash away the pretreatment agent and excess ink adhering to the fabric.

After the reduction washing, the fabric was washed again with water to wash away the reduction washing agent adhering to the fabric.

[Reference Example 1]

A pretreatment agent having the following composition that does not contain a cationic polymer was prepared; and then, inkjet printing, vapor heat treatment, and washing treatment were performed in the same manner as in Examples 1 to 5 and Comparative Examples 1 to 4, except that the pretreatment agent was applied and then dried with a dryer for 10 minutes before inkjet printing.

<Composition of the pretreatment agent in Reference Example 1>

<Glue agent> Sodium alginate powder (manufactured by Tanaka-nao Dye Shop): 4.2% by mass

<Deep dyeing agent> N-Alkylolamide (product name "Sunfloren SN", manufactured by Nicca Chemical Co., Ltd.): 4.5% by mass

<Antifoaming agent> Alcohol-based (product name "Antifoaming agent", manufactured by Furukawa Chemical Industry Co., Ltd., ingredients: higher alcohol): 2.5% by mass

<Preservative> Product name "Neoguard" (manufactured by Furukawa Chemical Industry Co., Ltd.): 0.5% by mass

Glycerin (manufactured by Fujifilm Wako Pure Chemical Corporation): 0.5% by mass
Water: balance

[Evaluation test]

The following evaluation was carried out on the evaluation fabrics that were inkjet printed after the pretreatment of each example.
The results are shown in Table 1.

<Intermittent operation stability (inkjet discharge test of the pretreatment agent)>

The inkjet device (Inkjet Lab, manufactured by Cluster Technology Co., Ltd.) was filled with the pretreatment agent, the voltage was adjusted so that the discharge speed was within the range of 4 m/s ± 5%, and it was stopped after 10 minutes of continuous discharge. The inkjet device was restarted after a 60 second stop time. When it was confirmed by the observation camera that the ink was ejected at a speed of 4 m/s ±5%, there were no satellites, and the ink was not scattered diagonally, the intermittent operation stability was evaluated as "o:Good." Any other case was evaluated as "×:Poor".

<Bleeding (print test)>

The resistance of the ink to bleeding was evaluated as follows.
The printed image pattern was visually observed from a position 30 cm away from the fabric. When the appearance of the intersections of the grid was as clear as in Reference Example 1, it was evaluated as "o:Good". When the appearance was inferior to Reference Example 1 and the intersections could not be confirmed, causing practical problems, it was evaluated as "×:Poor".

[Table 1]

| | | Example 1 | Example 2 | Example 3 | Example 4 | Comparative Example 1 | Comparative Example 2 | Comparative Example 3 | Comparative Example 4 | Example 5 |
|---|---|---|---|---|---|---|---|---|---|---|
| Cationic Polymer | Type | PVADL1 | PVADL1 | PVADL1 | PVADL1 | PVADL1 | PVADL1 | Polyallylamine Hydrochloride | Polyallylamine Hydrochloride | PVADL2 |
| | Content | 1.0% | 0.7% | 0.7% | 0.7% | 0.7% | 0.7% | 1.0% | 1.0% | 1.0% |
| Organic Solvent /Moisturizer | Type | Ethylene Glycol (Protic Polar Solvent) | Propylene Glycol (Protic Polar Solvent) | Ethylene Glycol (Protic Polar Solvent) | Glycerin (Protic Polar Solvent) | Diethylene Glycol Ethyl Methyl Ether (Aprotic Polar Solvent) | - | Ethylene Glycol (Protic Polar Solvent) | Diethylene Glycol Ethyl Methyl Ether (Aprotic Polar Solvent) | Ethylene Glycol (Protic Polar Solvent) |
| | Boiling Point | 197.6°C | 188°C | 197.6°C | 290°C | 176°C | - | 197.6°C | 176°C | 197.6°C |
| | Content | 40.0% | 40.0% | 20.0% | 40.0% | 40.0% | - | 20.0% | 20.0% | 20.0% |
| Antifoaming Agent | Silicone-Based | 2.5% | 2.5% | 2.5% | 2.5% | 2.5% | 2.5% | 0.23% | 0.23% | 0.23% |
| Evaluation | Intermittent Operation Stability | ○ | ○ | ○ | ○ | ○ | × | ○ | ○ | ○ |
| | Bleeding | ○ | ○ | ○ | ○ | × | ○ | × | × | ○ |

# EP 4 596 786 A1

[Considerations on the first embodiment of the pretreatment agent of the present invention]

As shown in Table 1, in Examples 1 to 5, in which the protic polar solvent was used as the organic solvent, stable inkjet printing was possible, and even when inkjet printing was performed without drying after pretreatment, the same level of bleeding resistance was obtained as in Reference Example 1, in which inkjet printing was performed after drying after pretreatment.

On the other hand, in Comparative Example 1, in which an aprotic polar solvent was used, bleeding occurred when inkjet printing was performed without drying. In Comparative Example 2, which did not contain an organic solvent itself, stable inkjet printing was not possible. In addition, in Comparative Examples 3 and 4, in which a cationic polymer that was not N-vinylformamide-based was used, bleeding occurred when inkjet printing was performed without drying.

[Considerations on the second embodiment of the pretreatment agent of the present invention]

As shown in Table 1, in Examples 1 to 5 using the moisturizer having a boiling point of 180°C or higher, stable inkjet printing was possible, and even when inkjet printing was performed without drying after pretreatment, the same level of bleeding resistance was obtained as in Reference Example 1, in which inkjet printing was performed after drying after pretreatment.

On the other hand, in Comparative Example 1, in which the boiling point of the moisturizer was lower than 180°C, bleeding occurred when inkjet printing was performed without drying. In Comparative Example 2, which did not contain a moisturizer, stable inkjet printing was not possible. In addition, in Comparative Examples 3 and 4, in which a cationic polymer that was not N-vinylformamide-based was used, bleeding occurred when inkjet printing was performed without drying.

Although the present invention has been described in detail with reference to specific embodiments, it is apparent to a person skilled in the art that various alterations and modifications can be made therein without departing from the spirit and scope of the present invention.

The present application is based on Japanese Patent Application No. 2022-155127 filed on September 28, 2022, which is herein incorporated in its entirety by reference.

Industrial Applicability

According to the present invention, in inkjet textile printing of fabrics using dye ink, the ink is applied without drying after application of the pretreatment agent, and inkjet printing can be performed smoothly and stably without bleeding. Therefore, according to the present invention, it is possible to realize improved productivity, lower costs, energy savings, and space savings.

## Claims

1. A pretreatment agent for inkjet textile printing, comprising an N-vinylformamide-based cationic polymer and an organic solvent,
   wherein the organic solvent is a protic polar solvent.

2. The pretreatment agent for inkjet textile printing according to claim 1,
   wherein a boiling point of the protic polar solvent is 180°C or higher.

3. The pretreatment agent for inkjet textile printing according to claim 1 or 2,
   wherein the boiling point of the protic polar solvent is 300°C or lower.

4. The pretreatment agent for inkjet textile printing according to claim 1 or 2,
   wherein a content of the protic polar solvent is 5% by mass or more and 50% by mass or less based on 100% by mass of the total of the pretreatment agent for inkjet textile printing.

5. A pretreatment agent for inkjet textile printing comprising an N-vinylformamide-based cationic polymer and a moisturizer,
   wherein a boiling point of the moisturizer is 180°C or higher.

6. The pretreatment agent for inkjet textile printing according to claim 5, wherein the boiling point of the moisturizer is 300°C or lower.

7. The pretreatment agent for inkjet textile printing according to claim 5, wherein the moisturizer comprises a protic polar solvent.

8. The pretreatment agent for inkjet textile printing according to claim 5 or 6, wherein a content of the moisturizer is 5% by mass or more and 50% by mass or less based on 100% by mass of the total of the pretreatment agent for inkjet textile printing.

9. The pretreatment agent for inkjet textile printing according to claim 1 or 7, wherein the protic polar solvent has an SP value of 18.0 MPa$^{1/2}$ or more.

10. The pretreatment agent for inkjet textile printing according to claim 1 or 7, wherein the protic polar solvent is a polyhydric alcohol.

11. The pretreatment agent for inkjet textile printing according to claim 1 or 5, further comprising an antifoaming agent.

12. The pretreatment agent for inkjet textile printing according to claim 11, wherein the antifoaming agent comprises a silicone-based antifoaming agent.

13. The pretreatment agent for inkjet textile printing according to claim 1 or 5, wherein a cationic degree of the N-vinylformamide-based cationic polymer is 2.0 meq/g or more and 8.0 meq/g or less.

14. The pretreatment agent for inkjet textile printing according to claim 1 or 5, wherein the N-vinylformamide-based cationic polymer comprises at least one selected from the group consisting of polyamidines and polyvinylamines.

15. The pretreatment agent for inkjet textile printing according to claim 1 or 5, wherein a content of the N-vinylformamide-based cationic polymer is 0.1% by mass or more and 5.0% by mass or less as a solid content based on 100% by mass of the total of the pretreatment agent.

16. A method of inkjet textile printing comprising:

   pretreating a fabric with the pretreatment agent for inkjet textile printing according to claim 1 or 5; and
   inkjet printing a pretreated area of the pretreated fabric without drying the pretreated fabric.

17. The inkjet textile printing method according to claim 16, wherein the pretreatment agent for inkjet textile printing is inkjetted onto the fabric.

18. The inkjet textile printing method according to claim 16, wherein the ink used in the inkjet printing comprises a disperse dye.

19. A pretreatment agent for inkjet textile printing to be inkjetted comprising an N-vinylformamide-based cationic polymer.

20. A pretreatment agent for inkjet textile printing comprising an N-vinylformamide-based cationic polymer and having a viscosity of 1.0 mPa·s or more and 30 mPa·s or less.

21. A pretreatment agent for inkjet textile printing comprising an N-vinylformamide-based cationic polymer and having a surface tension of 10 mN/m or more and 80 mN/m or less.

22. The pretreatment agent for inkjet textile printing according to any one of claims 19 to 21, further comprising an organic solvent, wherein the organic solvent is a protic polar solvent.

23. A method of inkjet textile printing comprising:

   a pretreatment step of pretreating a fabric by inkjetting the pretreatment agent comprising an N-vinylformamide-based cationic polymer onto the fabric; and
   a printing step of inkjet printing a pretreated area of the fabric.

## INTERNATIONAL SEARCH REPORT

| International application No. |
|---|
| **PCT/JP2023/034914** |

**A.    CLASSIFICATION OF SUBJECT MATTER**

*D06P 5/00*(2006.01)i; *D06P 5/30*(2006.01)i; *D06M 13/148*(2006.01)i; *D06M 15/21*(2006.01)i; *D06M 15/643*(2006.01)i
FI:    D06P5/00 104; D06P5/30; D06M15/21; D06M13/148; D06M15/643

According to International Patent Classification (IPC) or to both national classification and IPC

**B.    FIELDS SEARCHED**

Minimum documentation searched (classification system followed by classification symbols)

D06P1/00-7/00; D06M13/148; D06M15/21; D06M15/643

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2022/131245 A1 (KYOCERA CORP) 23 June 2022 (2022-06-23)<br>claim 1, paragraphs [0032]-[0033], [0042]-[0045], [0051], [0080]-[0106], fig. 1, table 1, examples 1-7 | 1-23 |
| Y | JP 2002-275769 A (SEIREN CO LTD) 25 September 2002 (2002-09-25)<br>claim 1, paragraphs [0007], [0010], [0019], [0037], [0040], table 1, example 6 | 1-23 |
| Y | WO 2011/055639 A1 (MIMAKI ENGINEERING CO., LTD.) 12 May 2011 (2011-05-12)<br>paragraphs [0032]-[0033], [0083], examples | 11-12 |
| Y | JP 2007-31847 A (NICCA CHEMICAL CO LTD) 08 February 2007 (2007-02-08)<br>claims, paragraph [0007], examples | 1-23 |
| Y | JP 10-325084 A (CIBA SPECIALTY CHEM HOLDING INC) 08 December 1998 (1998-12-08)<br>claims, paragraph [0003], examples | 1-23 |
| Y | JP 9-310288 A (DAISUTAA JAPAN KK) 02 December 1997 (1997-12-02)<br>claims, paragraph [0021], examples | 1-23 |

☑ Further documents are listed in the continuation of Box C.       ☑ See patent family annex.

| | |
|---|---|
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **07 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/034914** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-19173 A (SEIKO EPSON CORP) 06 February 2020 (2020-02-06) paragraphs [0108], [0110] | 20-21 |
| P, X | WO 2022/210717 A1 (MITSUBISHI CHEM CORP) 06 October 2022 (2022-10-06) entire text, in particular, tables 1-2, examples | 1-23 |

Form PCT/ISA/210 (second sheet) (January 2015)

**EP 4 596 786 A1**

## INTERNATIONAL SEARCH REPORT
### Information on patent family members

International application No.

**PCT/JP2023/034914**

| Patent document cited in search report | | | Publication date (day/month/year) | Patent family member(s) | Publication date (day/month/year) |
|---|---|---|---|---|---|
| WO | 2022/131245 | A1 | 23 June 2022 | (Family: none) | |
| JP | 2002-275769 | A | 25 September 2002 | (Family: none) | |
| WO | 2011/055639 | A1 | 12 May 2011 | US 2012/0219717 A1 paragraphs [0032]-[0033], [0088], examples | |
| JP | 2007-31847 | A | 08 February 2007 | (Family: none) | |
| JP | 10-325084 | A | 08 December 1998 | US 5948125 A claims, column 1, lines 27-31, examples | |
| JP | 9-310288 | A | 02 December 1997 | (Family: none) | |
| JP | 2020-19173 | A | 06 February 2020 | US 2020/0040523 A1 paragraphs [0108], [0110] | |
| WO | 2022/210717 | A1 | 06 October 2022 | (Family: none) | |

Form PCT/ISA/210 (patent family annex) (January 2015)

## REFERENCES CITED IN THE DESCRIPTION

**Patent documents cited in the description**

- JP H11302987 A
- JP 2003003385 A
- JP H9279487 A
- JP 2017530269 A
- JP 2016089288 A
- JP 2022155127 A

**Non-patent literature cited in the description**

- **J. BRANDRUP** ; **E. H. IMMERGUT** ; **E. A. GRULKE**. POLYMER HANDBOOK, vol. 2, 688-701